# EUROPEAN PATENT APPLICATION

(11) **EP 0 583 748 A1**
(43) Date of publication of application: **23.02.1994**
(21) Application number: 93112950.6
(22) Date of filing: 12.08.1993
(51) Int. Cl.: C07F 15/06, C01B 13/02, B01J 20/02, B01J 20/04

(54) **Method for recovering oxygen from oxygen-containing gaseous mixtures**

(30) Priority: 14.08.1992 US 930885
(71) Applicant: AIR PRODUCTS AND CHEMICALS, INC., Allentown, PA 18195-1501 (US)
(72) Inventor: Ramprasad, Dorai, Allentown, PA 18104 (US); Gilicinski, Andrew George, New Village, NJ 08886 (US); Pez, Guido Peter, Allentown, PA 18103 (US)
(74) Representative: Schwabe - Sandmair - Marx

(57) **Abstract**

The present invention relates to cobalt complexes which are capable of reversibly binding with oxygen. The complexes are designated as either [Co(terpy)(bipy)X]n Y or [Co(terpy)(phen)X]n Y, where terpy = terpyridine or substituted terpyridine, bipy = 2,2'-bipyridine or substituted bipyridine, phen = 1,10-phenanthroline or substituted phenanthroline, and X and Y represent specified coordinating anions or coordinating solvents. The subject cobalt complexes reversibly absorb molecular oxygen and can be used in processes for separating oxygen from oxygen-containing gaseous mixtures.

## Description

### FIELD OF THE INVENTION

This invention relates to cobalt complexes that reversibly bind with molecular oxygen and are useful in processes for separating oxygen from oxygen-containing gaseous mixtures.

### BACKGROUND OF THE INVENTION

Cryogenic distillation is the preferred method for separating oxygen from oxygen-containing gaseous mixtures. However, non-cryogenic processes for producing oxygen are now being developed which can be operated on-site using less energy. An attractive non-cryogenic process utilizes metal complexes which reversibly absorb oxygen. These complexes can be used as bulk absorbents or as oxygen carriers in gas separation membranes in a system wherein oxygen and a metal complex react according to the following relation:

nCoL₂ + O₂ <--> 0₂(CoL₂)ₙ+ O₂ KO₂ = [O₂(CoL₂)n/[CoL₂]n[O₂] (1)

wherein n = 1 or 2, depending on the mode of oxygen binding.

The equilibrium constant KO₂ determines the extent to which oxygen is bound to the complex and governs the regime in which a bulk absorbent or membrane system may be used in an oxygen separation process. In order for metal complexes to be used in industrial applications for producing oxygen, such complexes must be stable over time (especially resistant to oxidation), be cost effective and easy to prepare, perform at ambient temperatures, and be adaptable to provide the desired oxygen binding strength for a particular application. No metal complex is commercially available at this time which meets all these criteria.

Air separation processes using metal complexes are known in the art wherein oxygen is absorbed onto and desorbed from the resulting complex in a series of cyclic steps. In the absorption step of the cycle, a solution of the metal complex in an absorber is exposed to a flow of air or other oxygen-containing gas for a period of time at pressures above atmospheric and temperatures below room temperature until a desired percentage of the oxygen complex binds the oxygen. The adsorption step is then terminated and the flow of oxygen-containing gas to the absorber is ceased. In the desorption step of the cycle, the operating conditions of the absorber are changed by lowering the pressure and/or raising the temperature of the solution and passing a scrubber gas through the column to scrub at least a portion of the bound oxygen from the metal complex.

Metal complexes that bind oxygen reversibly have been known for many years and have been the subject of several reviews. The largest number of the metal complexes are cobalt complexes; see E. C. Niederhoffer, J. H. Timmons, A. E. Martell, Chem. Rev. 84 (1984) p. 137-203. A typical example of reversible oxygen binding for a cobalt Schiff base is shown below: 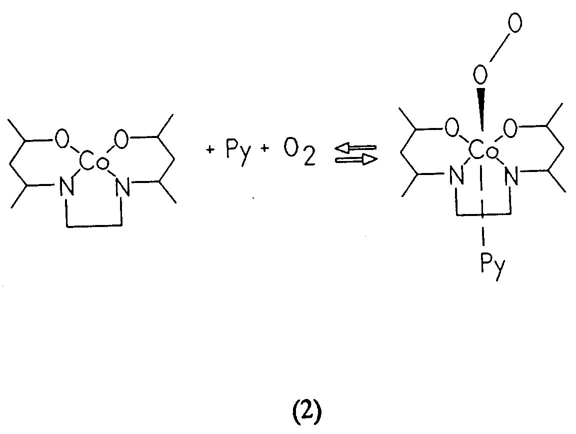
In the above-mentioned reaction, a solution of the cobalt Schiff base complex in an organic solvent containing a base pyridine was found to absorb oxygen at near-ambient temperatures. The absorbed oxygen can be removed either by warming or sparging the solution with nitrogen. However, no commercial use for such a system has been possible because of rapid auto-oxidation of the complex. Aqueous ammoniac solutions of cobalt (II) have been known to turn brown on exposure to oxygen due to formation of oxygen bridged adducts; see A. Werner, A. Mylius, Z. Anorg. Allg. Chem. 16 (1898) p. 245.

O₂ + 2[Co(NH₃)₅(H₂O)]⁺² <---> [(NH₃)₅Co-O₂-Co(NH₃)₅]⁺⁴ + 2H₂O (3)

A cobalt (II)/aqueous ammonia system was studied for air separation in a pre-war German paper; see W. Gluud, K. Keller, H. Nordt, Ber. Ger. Kohlentechnik., 4 (1933) p. 210. Again, auto-oxidation of the complex precluded its use. The best known reversibly oxygen binding cobalt complexes are those derived form Bis(salicylaldehyde) ethylenediimine (salen) and its derivatives: 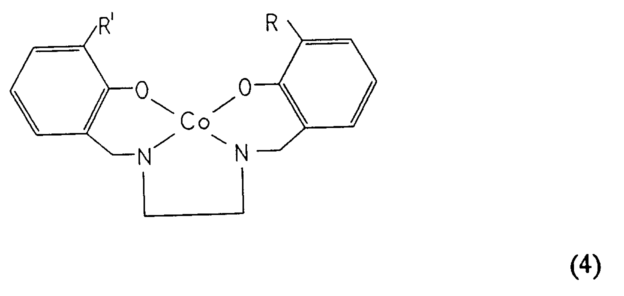
The solid state complex, CoSalen, wherein R = R' = H, binds oxygen reversibly wherein such oxygen can be desorbed upon heating. This complex was studied during the second world war by Calvin, et al. and the U.S. Bureau of Mines in a method for separating oxygen from air; see W. K. Wilmarth, S. Aranoff, M. Calvin, J. Amer. Chem. Soc. 68 (1946) p. 2263. The most promising of these complexes was the Fluomine complex, R and R' = F; see A. J. Adduci, ChemTech, Vol 6 (1976) p. 575. No present commercial use of this complex is known in air separation processes because of instability due to ligand oxidation.

While several metal complexes are known which reversibly bind oxygen, oxygen selective metal complexes are not currently being used commercially for separating oxygen from gaseous mixtures because the complexes are unstable and are succeptible to oxidation in solution.

### SUMMARY OF THE INVENTION

The compositions of the present invention comprise a class of cobalt complexes which bind oxygen to form a 2:1 µ-peroxodimer. The compositions of the present invention are represented by the following structural formulae: 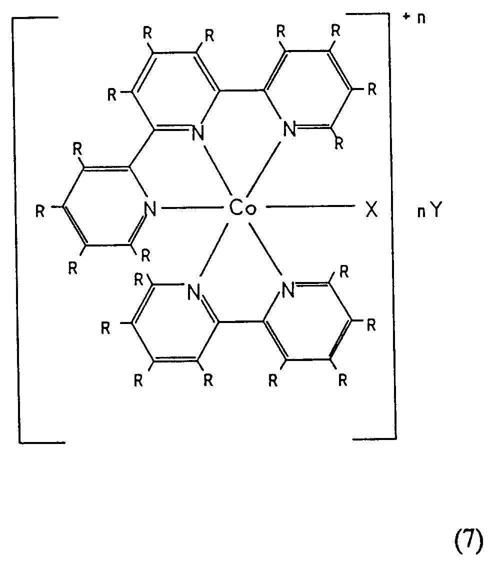
and 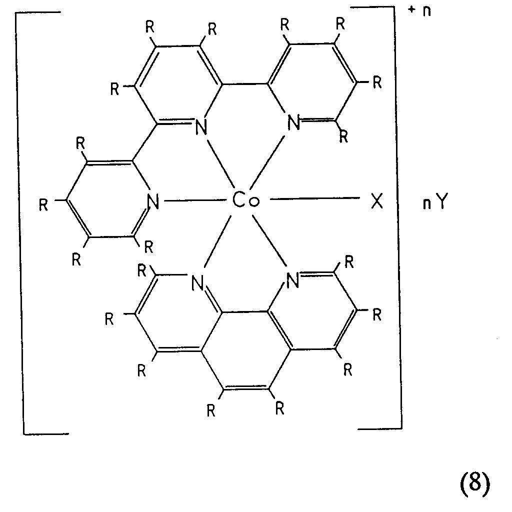
wherein each R is independently selected from the group consisting of a hydrogen atom, a halogen atom, phenyl, alkyl, alkoxy, nitro, amino or cyano; and
X is a coordinating organic solvent, Y is an anion and n is 2; X is a non-coordinating anion, Y is a non-coordinating anion and n is 1; X is a non-coordinating solvent, Y is a non-coordinating anion and n is 2; and X and Y are both coordinating anions and n is 1.

The binding strength of the subject cobalt complexes can be modified by selecting a desired combination of X and Y groups. For example, when X is a coordinating organic solvent, Y is an anion and n is 2; or alternately, when X and Y are both coordinating anions and n is 1, then the binding strength in solution is decreased, due to competition of the coordinating anion and/or solvent molecules with oxygen for binding to the sixth site on cobalt. When X and Y are both non-coordinating anions and n is 1; or alternately, when X is a non-coordinating solvent and Y is a non-coordinating anion, then the binding strength in solution is greatly increased due to the decreased competition of non-coordinating anion and/or solvent molecule(s) with oxygen for binding to the sixth site on cobalt. This dynamic equilibrium of anion, solvent, and oxygen for binding to the sixth site of cobalt in this new composition is a dramatic and effective way of modulating the binding strength of a given composition for oxygen in an organic solvent.

The above structural formulas (7) and (8) of the complexes of the present invention can be abbreviated as follows:

[Co(terpy)(bipy)X]ₙ Y or [Co(terpy)(phen)X]ₙ Y

Two references describe what appears to be a Co(2,2':6',2''-terpyridine)(2,2'-bipyridine) or Co(2,2':6',2''-terpyridine)(1,10-phenanthroline) complex (hereafter referred to as the Co(terpy)(bipy) or (Co(terpy)(phen) complex). While these structures appear similar to the composition of the present invention, the chemistry is not at all the same as that described in the present invention. The first reference, a report from Martell and Huchital, describes a Co(terpy)(bipy) complex in an acidic solution that was found to bind oxygen; see D. H. Huchital, A. E. Martell, Inorg. Chem. 13 (1974) p. 2966. The proposed structure was theorized to be: 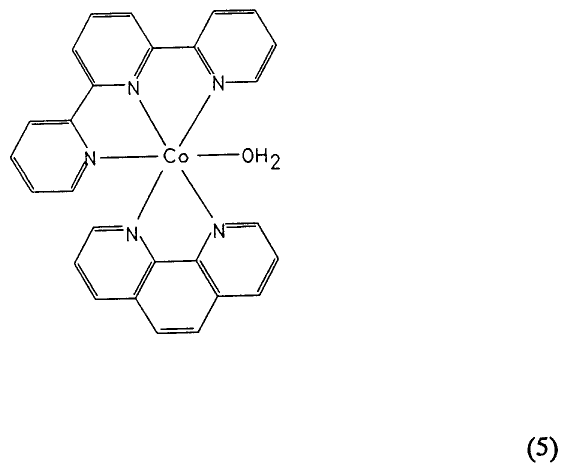
This structure was not isolated, but Footnote 13 in the referenced paper proposed a structure based on elemental analysis of precipitated hexafluorophosphate salts. The oxygen dimer [Co(terpy)(phen)O]₂(PF₆)₄ and the unoxygenated [Co(terpy)(phen)(OH₂)](PF₆)₂ complex were postulated via this elemental analysis. In this prior art complex, the sixth site of the cobalt center is coordinated to a water molecule, not an anion or organic solvent molecule as in the present invention. This distinction represents the critical difference between this prior art complex and the complexes of the present invention.

While the prior art complex is coordinated with a water molecule, the present invention claims a cobalt complex where an anion or organic solvent molecule is coordinated to the sixth site. This change in coordination provides an unexpected and dramatic change in the stability of the complexes to oxidation and control over binding strength when the complex is dissolved in an organic solvent in the absence of water. Huchital and Martell concluded that upon oxygen uptake of the complex, the resulting oxygen adduct was unstable demonstrating a half-life of only 2 hours. Consequently, this reference does not disclose a practical complex for reversibly absorbing molecular oxygen.

The second reference, a report by Lunsford and coworkers; K. Minzuno, S. Imamura, J. H. Lunsford, Inorg. Chem. 23 (1984), p. 3510, teaches a Co(terpy)(bipy) complex formed within a zeolite. No structure was proposed and the foregoing complex was not isolated, but the authors hypothesized its existence from ESR signals of the solid. From this measurement, the authors inferred that a small fraction of total cobalt resided in the Co(terpy)(bipy) state. Moreover, the cobalt complex was not coordinated with an anion or organic solvent.

In contrast to prior art cobalt(bipy)(terpy) and cobalt (bipy)(phen) complexes which are coordinated with water, the cobalt complexes of the present invention are synthesized and isolated in their non-oxygenated state and possess a coordinating or non-coordinating anion or solvent molecule on the sixth binding site of cobalt. Structures (7) and (8) demonstrate that the complexes of the present invention have five coordination sites on cobalt which are occupied by the polypyridine type ligands, and in solution, the sixth site is occupied by an anion or solvent molecule. When in contact with an oxygen-containing gas, the oxygen binds with the cobalt complex to form a reversible µ-peroxo-dimer in solution. Oxygen can be desorbed from the complex by pressure or temperature swing processes.

Another advantage of the complexes of this invention resides in their remarkable stability in solution. The claimed cobalt complexes are believed to possess half lives of eight months or more in solution. Moreover, the oxygen binding strengths of the subject complexes can be tuned by varying the specific ligand, anion, or solvent used in their synthesis.

The oxygen binding properties of the subject cobalt complexes can be conveniently controlled by selecting a desired solvent and/or anion in the competitive equilibria for the sixth binding site on cobalt. The complexes of the present invention have dramatically improved stability toward oxidative degradation in solution and thus have utility for separating oxygen from oxygen-containing mixtures in both the immobilized liquid membrane and absorption/desorption processes described under the Background of the Invention section. As set forth in detail below, complexes of the present invention can be prepared easily, economically and in good yield, and have particular utility in absorbent applications where a large inventory of the cobalt complex would be required.

### BRIEF DESCRIPTION OF THE FIGURES

Further features and advantages of the preferred complexes of the present the invention can be obtained by reference to the accompanying drawings, in which:
FIGURE 1 is an oxygen isotherm for a complex of the present invention; and
FIGURE 2 is a simplified process flow diagram an adsorption/desorption system for use of the complexes of the present invention.

### DETAILED DESCRIPTION OF THE INVENTION

The present invention represents a family of reversible cobalt complexes of the structural formulas (7) and (8) designated as either [Co(terpy)(bipy)X]n Y or [Co(terpy)(phen)X]n Y, where terpy = terpyridine or substituted terpyridine, bipy = 2,2'-bipyridine or substituted bipyridine, phen = 1,10-phenanthroline or substituted phenanthroline, and X and Y are defined as set forth above under the Summary of the Invention.

Examples of substituted phenanthrolines include 5-chloro-1,10-phenanthroline, 5-nitro-1,10-phenanthroline, 4-methyl-1,10-phenanthroline, 5-methyl-1,10-phenanthroline, 5,6-dimethyl-1,10-phenanthroline, 4,7-diphenyl-1,10-phenanthroline, and the like. The coordinating anion may be any anion which can act as a ligand to a cobalt ion in solution. Suitable coordinating anions include trifluoromethanesulfonate also known as triflate, 4-chlor-3-nitrobenzenesulfonate, nitrobenzene sulfonate and substitutes thereof, toluenesulfonate, and the like. The non-coordinating anions may be any anion which does not act as a ligand to the subject cobalt ions in solution, but simply provides charge neutrality for the overall complex. Suitable examples include hexafluorophosphate, perchlorate, tetrafluoroborate, and the like.

Suitable coordinating solvents include any solvent which can form a coordination complex in solution with the cobalt ion of the complex. Suitable coordinating solvents include acetonitrile. Non-coordinating solvents include any solvent which does not form a coordination complex in solution with the cobalt metal ion. Suitable non-coordinating solvents include nitrobenzene, nitromethane, nitriles and @-butyrolactone. The complexes are synthesized as solid materials and are solubilized in the desired solvent for use as solutions.

The family of complexes making up the compositions of the present invention has been characterized in a number of ways to determine the chemical behavior of the oxygen binding reaction and to determine the nature of the anion or solvent coordination to the sixth site of cobalt in the non-oxygenated complex. Raman experiments show that the present complexes absorb oxygen to form a 2:1 µ-peroxo dimer structure as set forth more specifically in Example 3 below. NMR measurements confirm the structure of a solution µ-peroxo dimer of these oxygenated complexes. Electrochemical measurements have shown that the reaction forming the µ-peroxo dimer consists of an equilibrium between only two species, the oxygenated dimer and the non-oxygenated cobalt complex; see Example 3 for further information concerning such measurements. Coordination of the anion onto the sixth site of the non-oxygenated cobalt as well the structure were confirmed by infrared analysis which shows changes in certain bands between the oxygenated and non-oxygenated forms of the complex in solution. Infrared analysis shows that triflate is coordinated to the sixth site of cobalt in the complex, which triflate is displaced upon being oxygenated. The structure was also confirmed by analysis of the crystal structure of:
[Co(terpy)(3,4,7,8-tetramethyl-1,10-phenanthroline)(triflate)](triflate).

After [Co(terpy)(bipy)(triflate)](triflate) has been in a solution of nitrobenzene for a long period of time, deactivation of the complex toward oxygen binding occurs. Deactivation is believed to be caused either by disproportionation towards Co(terpy)₂ and Co(bipy)₂ or due to a change from a hexacoordinate to a pentacoordinate cobalt complex. Electrochemical reduction of cobalt (II) to (I), followed by reoxidation to cobalt (II) in the presence of oxygen is thought to provide the driving force to regenerate the oxygen active complex. This method was indeed shown to increase the oxygen activity by about 8% in a preliminary investigation of the process. An example of thermal treatment is found for the same complex where a solution of almost completely inactive complex was heated to 150°C, and cooled under air purge. The result was a solution with 46% activity towards oxygen binding restored.

### Argon Purification

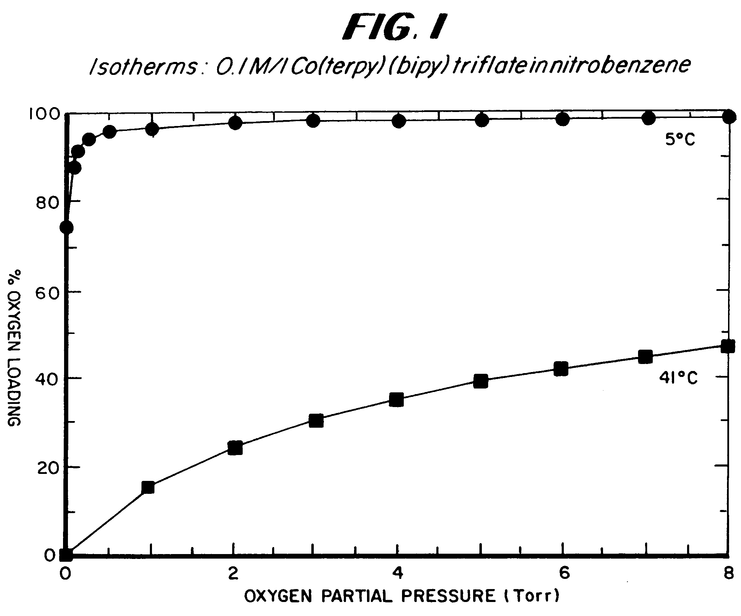

The large heats of binding for some Co(terpy)(bipy) complexes of the present invention allows their use as adsorbents in a temperature swing process for deoxygenation of argon in a cryogenic air separation plant. One example of such a process is described below. From the binding constants of
[Co(terpy)(bipy)(triflate)] (triflate) in nitrobenzene at 5° and 41°C, isotherms of oxygen loading vs. oxygen partial pressure were calculated for concentrated solutions of the complex, as seen in FIGURE 1. The isotherm shows a very steep rise at 5°C, with over 99% of the complex oxygenated at 1 Torr oxygen. A much shallower isotherm is seen at 41°C. There is a 50% working capacity for oxygen when cycling at 8 Torr oxygen between the two temperatures. A larger working capacity can be obtained by cycling between a pressurized system at 5°C and a depressurized purge at 40°C.

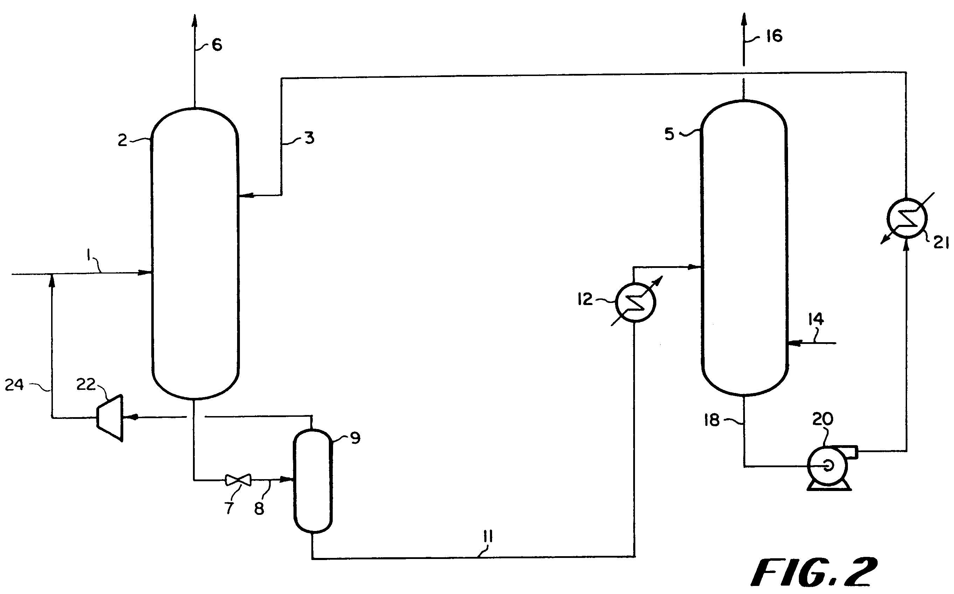

FIGURE 2 presents a process flow diagram wherein the cobalt complexes of the present invention are used to removed oxygen from an oxygen-containing argon stream. A crude argon stream comprising 99.1% Ar, 0.7% N₂, and 0.2% oxygen is fed through line 1 into adsorption column 2 which contains a bed of adsorbent comprising 0.1 moles per liter (M/L) [Cobalt(terpy)(bipy)(triflate)] (triflate) complex in nitrobenzene. Nitrobenzene solvent is bound to the sixth site of the complex. The details of the preparation of this complex is described in Example 4 below.

Adsorption column 2 is maintained at a pressure of 3 atmospheres and a temperature of 5°C. The crude argon stream from desorption column 5 is fed in countercurrent flow via line 3 to the deoxygenated solution of the cobalt complex, in nitrobenzene. Product argon containing less than 1 ppm oxygen exits column 2 through line 6. The cobalt complex solution is removed from the bottom of column 2 through valve 7 via line 8 to flasher 9 where the solution is flashed down to 1 atm pressure. The depressurized absorbent in solution is passed via line 11 through heat exchanger 12 where it is heated to 40°C and sent into desorption column 5 maintained at about 41°C and 1 atmosphere pressure.

Crude argon feed is used as a gas purge and is introduced through line 14 into column 5 to remove oxygen from the heated solution. For this system, about 16% of the total crude argon feed is fed into desorption column 5. The purge gas exiting desorption column 5 through line 16 contains about 1% oxygen which is removed from the oxygenated complex. The purge gas in line 16 is fed back into a cryogenic air separation plant (not shown) to remove oxygen to form gas containing less than about 0.2% oxygen. The deoxygenated solution of cobalt complex is removed from the bottom of column 5 through line 18, pressurized to 3 atmospheres via pump 20, cooled to about 5°C in heat exchanger 21 and circulated back to absorption column 2 through line 3. Finally, the off gas from flasher 9 is pressurized in expander 22 and passed through line 24 to combine with crude argon in line 1. The process is capable of producing of argon with less than one part per million oxygen contamination.

The cobalt complexes of the present invention can be used in numerous applications including oxygen scavenging medium for deoxygenating other gas streams, e.g., nitrogen, propane, butane and other hydrocarbons; and as an active transport material in a liquid based facilitated transport membrane for separating oxygen from air.

The present cobalt complexes are well suited for use in a wide variety of oxygen separation processes. The complexes can be used in the presence of a solvent as a selective absorbent for oxygen to separate oxygen from other gaseous components; e.g., nitrogen, argon as exemplified above, and the like. When the subject cobalt complexes are used as an active transport medium, an immobilized liquid membrane containing the oxygen carrier gas is used as a mobile species. An oxygen-containing gas mixture is brought into contact with a desired cobalt complex at ambient temperature for a time sufficient for at least a portion of the oxygen to bind with the complex. The bound oxygen is subsequently released from the complex and recovered as product. The oxygen can be released by various means such by creating a pressure differential or temperature differential. In cases in which the cobalt complexes are incorporated into membrane structures, the oxygen is transported across the membrane and subsequently released on the side opposite the feed.

The following examples are provided to further illustrate the scope of the present invention and are not to be construed as limiting the scope of the appended claims.

### EXAMPLES

### Experimental

In the following examples, unless otherwise noted, all parts and percentages are by weight. The materials listed below were purchased from Aldrich Chemical Co. (940 W. St. Paul Avenue, Milwaukee, WI 53233) and used in the following syntheses on an as received basis:
2,2'-bipyridine,
2,2',6,2'-terpyridine,
1,10-phenanthroline,
5-chloro-1,10-phenanthroline,
5-nitro-1,10-phenanthroline,
4,7-diphenyl-1,10-phenanthroline,
4,4-diphenyl-2,2'-bipyridine,
4,4-dimethyl-2,2'-bipyridine,
3,4,7,8-tetramethyl-1,10-phenanthroline,
4-methyl-1,10-phenanthroline,
5,6-dimethyl-1,10-phenanthroline.
Co(terpy)Cl₂ and Co(terpy)Br₂ were synthesized via known literature routes; see Harris, C. M. Lockyer, T. N. Martin, R. L. Patil, H. R. H. Sinn, E. Stewart, I. M., Aust. J. Chem., Vol. 22, p 2105 (1969); which synthesis routes are incorporated herein by reference and made a part of this application. All solvents used in syntheses were reagent grade and used without further purification. Nitrobenzene used in conducting stability studies was distilled under nitrogen and dried with P₂O₅. Cyclic voltammetry analysis was performed in nitrobenzene with 0.10M/L tetrabutylammonium triflate electrolyte (unless otherwise stated), at a glassy carbon electrode versus silver/silver ion reference (+292 mV vs. SCE, saturated calomel electrode).

### EXAMPLE 1

### [Co(terpy)(4,7-diphenyl-1,10-phenanthroline)O]₂(triflate)₄

To a mixture of Co(terpy)Cl₂ (0.4g, 1.1 mmol), silver triflate (AgOSO₂CF₃) (0.565g, 2.2 mmol) and 4,7-diphenyl-1,10-phenanthroline (0.36g, 1.1 mmol), was added 30 ml of acetone and the contents were stirred in air for 1 hour while cooling in ice water. The resulting silver chloride was filtered and the filtrate was poured into 250 ml of hexane to give a dark brown oil. The oil was then dissolved in a minimum of acetone and the product was precipitated by adding ether. More acetone was added to redissolve the precipitate and the solution was set aside in a fume hood to form crystals. The crystals were filtered and washed with ether and dried in "vacuo". The identity and purity of the solid was obtained via electrochemistry in nitrobenzene (E_{1/2} = +0.33V vs. Ag/Ag+, purity = 99%). The yield obtained during this synthesis was 0.63g (62%).

| Elemental Analysis: Calculated for C₈₂H₅₄N₁₀Co₂O₁₄S₄F₁₂2H₂O | | | |
|---|---|---|---|
| Calculated: | C 51.47%, | H 2.92%, | N 7.32% |
| Found: | C 51.42%, | H 3.16%, | N 6.99% |

### EXAMPLE 2

### [Co(terpy)(4,7-diphenyl-1,10-phenanthroline)(triflate)](triflate)

The complex of Example 1 (0.137g, 0.15 mmol) was dissolved in 50 ml of acetone. Nitrogen was bubbled into the solution with gentle warming until the dark colored solution turned orange. The solvent was removed under vacuum on a Shlenck line to provide an oily red solid. This solid was dissolved in a minimum amount of degassed nitrobenzene in an inert atmosphere box and layered with benzene. On long standing, an orange powder was produced which was filtered and washed with 25 ml of toluene followed by 25 ml of hexane. The yield obtained during this synthesis was 0.095g (69%). The complex was characterized via U.V. visible and infrared spectroscopy by the procedures set forth below.

The presence of a coordinated triflate was proven by infrared spectroscopy and a crystal structure determination. In one experiment, the oxygen adduct Co(terpy)(phen)O]₂(triflate)₄, i.e. [Co(terpy)(4,7-diphenyl-1,10-phenanthroline)O]₂(SO₃CF₃)₄ of Example 1 was degassed in solution by bubbling nitrogen as set forth under Example 2 above, and the new complex of this invention, [Co(terpy)(4,7-diphenyl-1-10-phenanthroline)SO₃CF₃]SO₃CF₃, was isolated. The infrared spectrum of the oxygen adduct showed only bands due to ionic triflate; bands at 1280 cm⁻¹ [nSO₃(E)] and 1030 cm⁻¹ [NSO₃(A)] and also bands at 1225 cm⁻¹ n[CF₃(A1)] and 1160 cm⁻¹ n[CF3(E)].

In contrast, the infrared spectrum of the deoxygenated species was considerably different in the triflate region, with the band at 1280 cm⁻¹ disappearing and new bands appearing at 1300 cm⁻¹ and 1240 cm⁻¹. In addition, the nCF₃(A1) band at 1160 cm⁻¹ and the NSO₃(A1) band at 1030 cm⁻¹ were shown to have developed shoulders indicating the presence of two types of triflate present in the deoxygenated complex of the present invention. Literature values for NSO₃(E) in covalently bonded monodentate triflates were 1380 cm⁻¹ compared to 1280 cm⁻¹ for ionic triflate; Lawrence, G. A., Chem. Rev., Vol.86, pp 17-33 (1986).

The band observed at 1300 cm⁻¹ for NSO₃(E) does not have as high a vibrational frequency as that of a normal covalent bond (1380 cm⁻¹). However, in the complex of this example, the triflate was trans to a strongly electron-donating pyridine. Thus, it would be reasonable to expect the band to be weakened from the normal value of 1380 cm⁻¹. Indeed, Blake and coworker, J. C. S. Chem. Comm., p 815 (1974)), observed that, in the case of an iridium complex where a triflate is trans to a methyl group, the NSO₃(E) occurred at 1328 cm⁻¹, a lower wavelength than expected.

The presence of a coordinated triflate structure was also confirmed by X-ray diffraction. Single crystals of the complex [Co(terpy)(4,7-diphenyl-1,10-phenanthroline)(triflate)](triflate) were grown and the crystal structure was solved as set forth under the Summary of the Invention. The foregoing complex [Co(terpy)(4,7-diphenyl-1,10-phenanthroline)-(triflate)](triflate) was found to be exceptionally stable with a half life of over eight months.

### EXAMPLE 3

### [Co(terpy)(bipy)O]₂(PF₆)₄

A slurry of Co(terpy)Br₂ (0.4g, 0.89 mmol), 2,2'-bipyridine (0.15g, 0.96 mmol) NH₄PF₆ (0.35g, 2.1 mmol) in 100 ml of methanol was stirred for ten minutes while being exposed to ambient air. The brown solid that precipitated was filtered and washed with 20 ml of methanol followed by diethyl ether. The solid was dissolved in acetone and reprecipitated by adding diethyl ether. More acetone was added to this mixture until the mixture became deep red in color. The brown powder which remained undissolved was filtered, washed with ether and dried at 100°C under vacuo for one hour. The identity and purity of the solid was obtained via electrochemistry in acetonitrile with 0.10 M/L tetrabutylammonium hexafluorophosphate electrolyte (E^{1/2} = +0.24V vs Ag/Ag⁺ purity = 96%). The yield obtained during this synthesis was 0.33g (50%).

| Elemental analysis: Calculated for C₅₀H₃₈N₁₀Co₂O₂P₄F₂₄H₂O | | | |
|---|---|---|---|
| Calculated: | C 39.30%, | H 2.62%, | N 9.17% |
| Found: | C 39.12%, | H 2.69%, | N 9.06% |

The complex [Co(terpy)(bipy)(acetonitrile)]₂(PF₆) in acetonitrile formed from the product of the oxygenated complex of this example was analyzed by Raman spectroscopy to demonstrate that a @-peroxo dimer complex was formed. A Raman spectra of a solution of the foregoing complex in acetonitrile without oxygen present provided several complex bands. When oxygen was bubbled into the solution of the complex, a new oxygen stretch band at 824 cm⁻¹ was observed in the Raman spectra indicating the peroxo complex. A 1:1 complex is known to have an oxygen stretching vibration near 1100 cm⁻¹.

The structure of the @-peroxo dimer was also confirmed by NMR. COSY experiments (2-dimensional NMR) were performed to assign resonances for each ring in the ligand systems, and heteronuclear correlation experiments confirmed corresponding proton NMR signals. A @-peroxide structure was determined from these data wherein the structure possessed an oxygen molecule bound to the sixth site of two centers with bipyridine and terpyridine ligands.

Cyclic voltammetry experiments, were performed on the same complex used in the Raman and NMR studies to characterize the equilibrium between the unbound and oxygen bound @-peroxo dimer complexes. The results showed that oxidation of the unbound complex occurred at about +0.22 V vs. Ag reference (silver/0.01M.l) silver nitrate), while oxidation of the dimer was observed at +0.84 V vs Ag/Ag⁺ reference. The peak currents provided a means of quantifying the concentrations of the two species, and a quantitative conversion of cobalt complex to its @-peroxo dimer was always observed. Similar results were obtained with a complex of the present invention in which a non-coordinating solvent, e.g. nitrobenzene, was used; see Example 4 below.

### EXAMPLE 4

### [Co(terpy)(bipy)O]₂(triflate)₄

The complex [Co(terpy)(bipy)O]₂(PF₆)₄ (0.10g, 0.07 mmol) was dissolved in 20 ml of acetone and tetrabutylammonium triflate (0.50 g, 1.28 mmol) was added. The solution was stirred for ten minutes, then the solvent was removed under vacuum giving a dark oily residue. Methylene chloride was added to the oil resulting in the precipitation of a brown solid, which was filtered and redissolved in acetone. Another 0.5g of tetrabutylammonium triflate was added, and the solvent was removed under vacuum. Methylene chloride was added causing the desired product to precipitate from solution. The yield for this synthesis was 0.065g (65%). The solid product was characterized in nitrobenzene (E1/2 = +0.34V vs. Ag/Ag⁺, purity = 97%) via electrochemical experiments.

| | | | |
|---|---|---|---|
| Calculated: | C 41.51%, | H 2.49%, | N 8.97% |
| Found: | C 41.33%, | H 2.61%, | N 8.82% |

### EXAMPLE 5

### [Co(terpy)(bipy)O]₂(triflate)₄

[Co(terpy)(bipy)O]₂(triflate)₄ is also synthesized by reacting Co(terpy)Cl₂, silver triflate and bipy using the procedure set forth in Example 1.

### EXAMPLE 6

### [Co(terpy)(5,6-dimethyl-1,10-phenanthroline)O]₂(triflate)₄

This complex was synthesized via a procedure similar to Example 1 in which a mixture of Co(terpy)Cl₂, silver triflate and 5,5-dimethyl-1,10-phenanthroline were reacted. The yield was 23% and could possibly have been improved by cooling.

| Elemental Analysis: Calculated for C₆₂H₄₆N₁₀Co₂O₁₄S₄F₁₂H₂O | | | |
|---|---|---|---|
| Calculated: | C 45.20%, | H 2.91%, | N 8.50% |
| Found: | C 45.12%, | H 3.02%, | N 8.16% |

### EXAMPLE 7

### [Co(terpy)(5-chloro-1,10-phenanthroline)O]₂(triflate)₄

To a mixture of Co(terpy)Cl₂ (0.2g, 0.5 mmol) 5-chloro-1,10-phenanthroline (0.118g, 0.5 mmol) and silver triflate (0.29g, 1.0 mmole) was added 10 ml nitrobenzene. The solution was stirred for 45 minutes and filtered through celite. An orange solid was precipitated upon adding ether to obtain 0.08g (yield 18%) of product. The solid product was characterized by electrochemical experiments conducted in nitrobenzene (E_{1/2} = +0.44V vs. Ag/Ag⁺, purity = 93%).

### EXAMPLE 8

### [Co(terpy)(4,4'-diphenyl-2,2'-bipyridine)O]₂(triflate)₄

The complex of Example 8 was synthesized according to the procedure of Example 1 using a mixture of Co(terpy)Cl₂, 4,4'-diphenyl-2,2'-bipyridine and silver triflate. The yield was 56%. The yields could possibly have been increased by running the reaction at a lower temperature. The purity of the solid was confirmed by electrochemistry.

### EXAMPLE 9

### [Co(terpy)(4,4'-dimethyl-2,2'-bipyridine)O]₂(triflate)₄

The complex of Example 9 was synthesized by the procedure according to Example 1 using a mixture of Co(terpy)Cl₂, 4,4'-diphenyl-2,2'-bipyridine, and silver triflate. The yield was 45%. The identity and purity of the solid was obtained by cyclic voltammetry in nitrobenzene (E_{1/2} = +0.31V vs. Ag/Ag⁺, purity = 90%).

### EXAMPLE 10

### [Co(terpy)(1,10-phenanthroline)O]₂(triflate)₄

This complex was prepared according to the procedure of Example 1. To a mixture of 0.41g (1.13 mmoles) of Co(terpy)Cl₂, 0.573 (2.23 mmoles) of AgOSO2CF3, and 0.235g (1.3 mmoles) of 1,10-phenanthroline were added 30 ml acetone in a beaker. The yield was 45.5%.

| Elemental Analysis: Calculated for C₅₈H₃₈N₁₀Co₂O₁₄S₄F₁₂2H₂O | | | |
|---|---|---|---|
| Calculated: | C 43.26%, | H 2.61%, | N 8.70% |
| Found: | C 43.33%, | H 2.60%, | N 8.66% |

### EXAMPLE 11

### [Co(terpy)(4-methyl-1,10-phenanthroline)O]₂(PF₆)₄

This complex was synthesized according to the procedure of Example 1 wherein a mixture of Co(terpy)Cl₂, silver triflate and 4-methyl-1,10-phenanthroline were reacted to provide a 33% product yield. The identity and purity of the solid was obtained by cyclic voltammetry in acetonitrile with 0.10 M/L tetrabutylammonium hexafluorophosphate (E_{1/2} = +0.20 V vs. Ag/Ag⁺, purity = 98%).

### EXAMPLE 12

### [Co(terpy)(3,4,7,8-tetramethyl-1,10-phenanthroline]O]₂(triflate)₄

The complex of Example 12 was prepared according to the procedure of Example 1 in which a mixture of Co(terpy)Cl₂, silver triflate and 3,4,7,8-tetramethyl-1,10-phenanthroline were reacted. The yield was 64.6%. The identity and purity of the solid was obtained by cyclic voltammetry in nitrobenzene with 0.10 M/L tetrabutylammonium 4-chlor-3-nitrobenzenesulfonate (Synthesis described below.) electrolyte (E_{1/2} = +0.20 V vs. Ag/Ag⁺, purity = 99%).

Tetrabutylammonium 4-chloro 3-nitrobenzene sulfonate was prepared by the following procedure. Sodium 4-chlor-3-nitrobenzene sulfonate (3.4g of 80% concentration) was dissolved in 100 ml of water. 3.4g of tetrabutylammonium chloride was dissolved in a minimum of water and the two solutions were mixed to form a white precipitate. The precipitate was dissolved in methylene chloride, dried with MgSO₄ and crystallized by adding ether. The yield was 2.34g. An 'H NMR confirmed the identity of the product.

### EXAMPLE 13

### [Co(terpy)(3,4,7,8-tetramethyl-1,10-phenanthroline)(triflate)](triflate)

The complex of Example 12 (0.070g) served as the precursor in preparing this composition. The precursor was dissolved in 3-4 ml of dry nitrobenzene in an H tube and was warmed to ^{∼}100°C while bubbling nitrogen through the sample for 10-15 minutes. The dark brown solution turned to a red color when the sample was deoxygenated. This solution was filtered to the other side of the H tube, degassed, and hexane was layered on to the nitrobenzene solution. Many cube like crystals were formed during a period of three days along with a few needles.

The structure was confirmed by determining its crystal structure. Two acetone molecules were found with each dimer complex molecule, presumably from the recrystallization of the complex, and a M-peroxo dimer structure was conclusively demonstrated in the solid state crystal structure.

### EXAMPLE 14

### [Co(terpy)(5-nitro-1,10-phenanthroline)O]₂(triflate)₄

This complex was prepared according to the procedure of Example 7 except the reaction was conducted using an ice/water bath. An orange/brown solid was precipitated upon adding toluene. A mixture of Co(terpy)Cl₂, silver triflate, and 5-nitro-1,10-phenanthroline were used to obtain 0.712g of the product for a yield of 75.8%. The identity and purity of the solid was obtained by cyclic voltammetry in nitrobenzene (E_{1/2} = +0.41V vs. Ag/Ag⁺, purity = 93%).

### CONCLUSION

The cobalt complexes of the present invention provide a significant contribution to the art of metal complexes because they can be made in fewer steps and can be made from relatively inexpensive and readily available starting materials than previous complexes such as cobalt Schiff base complexes. The present complexes are unique in that the binding strength of the complex for oxygen can be conveniently modified by varying the coordinating anion to be incorporated into the complex. Applicants have thus discovered that binding strength of oxygen to the subject complexes can be regulated by varying anion coordination to the cobalt center in a cobalt complex.

Moreover, the present complexes can be regenerated by thermal or electrochemical methods, unlike previous complexes which irreversibly lose oxygen activity over time. The stability of the present complexes in solution is exceptionally long, with a half life of over eight months projected for one preferred embodiment of the present invention. This compares to lifetimes of up to one month for the best systems of the prior art.

## Claims

1. A cobalt complex represented by the structural formulae: 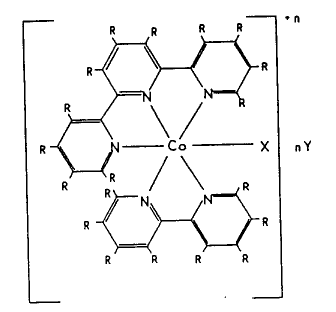 and 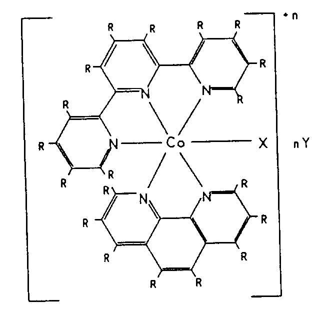 wherein each R is independently selected from the group consisting of a hydrogen atom, a halogen atom, phenyl, alkyl, alkoxy, nitro, amino or cyano; and
X is a coordinating organic solvent, Y is an anion and n is 2; X is a non-coordinating anion, Y is a non-coordinating anion and n is 1; X is a non-coordinating solvent, Y is a non-coordinating anion and n is 2; and X and Y are both coordinating anions and n is 1.

2. The composition of Claim 1 wherein the coordinating organic solvent is acetonitrile.

3. The composition of Claim 1 wherein the coordinating anion is selected from the group consisting of trifluoromethanesulfonate, nitrobenzene sulfonate, 4-chloro-3-nitrobenzenesulfonate, toluenesulfonate, toluenenitrite and mixtures thereof.

4. The composition of Claim 1 wherein said non-coordinating anion is selected from the group consisting of hexafluorophosphate, perchlorate, tetrafluoroborate and mixtures thereof.

5. The composition of Claim 1 wherein said non-coordinating solvent is selected from the group consisting of nitrobenzene, nitromethane, @-butyrolactone, and mixtures thereof.

6. The composition of Claim 1 wherein said complex is [Co(terpyridine)(4,7-diphenyl-1,10-phenanthroline)(triflate)] (triflate).

7. The composition of Claim 1 wherein said complex is [Co(terpyridine)(3,4,7,8-tetramethyl-1,10-phenanthroline)(triflate)](triflate).

8. The composition of Claim 1 wherein said complex is [Co(terpyridine)(5-nitro-1,10-phenanthroline)triflate](triflate).

9. The composition of Claim 1 wherein said complex is [Co(terpyridine)(bipyridine)(acetonitrile)](PF₆)₂.

10. The composition of Claim 1 wherein said complex is [Co(terpyridine)(5,6-dimethyl-1,10-phenanthroline)(triflate)](triflate).

11. The composition of Claim 1 wherein said complex is [Co(terpyridine)(4,4'-diphenyl-2,2'-bipyridine)triflate](triflate).

12. The composition of Claim 1 wherein said complex is Co(terpy)(1,10-phenanthroline)triflate](triflate).

13. The composition of Claim 1 wherein said complex is [Co(terpyridine)(bipyridine)(nitrobenzene)](triflate)₂.

14. The composition of Claim 1 wherein said complex is [Co(terpy)(5-chloro-1,10-phenanthroline)triflate](triflate).

15. The composition of Claim 1 wherein said complex is [Co(terpy)(4,4'-dimethyl-2,2'-bipyridine)nitrobenzene](triflate)₂.

16. The composition of Claim 1 wherein said complex is [Co(terpy)(4-methyl-1,10-phenanthroline)acetonitrile]₂(PF₆)₄.

17. The composition of Claim 1 wherein said complex is [Co(terpyridine)(bipyridine)(triflate)](triflate).

18. A cobalt complex represented by the structural formula: 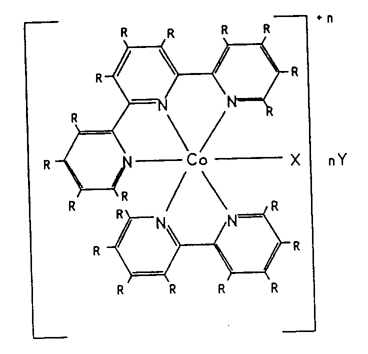 wherein each R is independently selected from the group consisting of a hydrogen atom, a halogen atom, phenyl, alkyl, alkoxy, nitro, amino or cyano; and
X is a coordinating organic solvent, Y is an anion and n is 2; X is a non-coordinating anion, Y is a non-coordinating anion and n is 1; X is a non-coordinating solvent, Y is a non-coordinating anion and n is 2; and X and Y are both coordinating anions and n is 1.
